# EUROPEAN PATENT APPLICATION

(11) **EP 4 300 642 A1**
(43) Date of publication of application: **03.01.2024**
(21) Application number: 21928465.0
(22) Date of filing: 02.03.2021
(51) Int. Cl.: H01M 10/04, H01M 10/058

(54) **FLEXIBLE BATTERY AND METHOD FOR MANUFACTURING SAME**

(71) Applicant: Ningde Amperex Technology Limited, Ningde, Fujian 352100 (CN)
(72) Inventor: LIU, Ning, Ningde, Fujian 352100 (CN); LI, Chenchen, Ningde, Fujian 352100 (CN); LIU, Daolin, Ningde, Fujian 352100 (CN)
(74) Representative: Icosa
(86) International application number: PCT/CN2021/078706
(87) International publication number: WO 2022/183374

(57) **Abstract**

This application relates to the field of battery technologies and provides a flexible battery and a manufacturing method thereof. The flexible battery includes a plurality of cathode plates, a cathode electrical connector, a plurality of anode plates, an anode electrical connector, and a plurality of separators. The cathode electrical connector is welded to the plurality of cathode plates, and the anode electrical connector is welded to the plurality of anode plates. The plurality of cathode plates, the plurality of anode plates, and the plurality of separators are wound on the cathode electrical connector and the anode electrical connector. The plurality of cathode plates, the plurality of anode plates, and the plurality of separators form a plurality of cell units. Portions, located between adjacent two of the cell units, of the cathode electrical connector and the anode electrical connector form spine portions. The cathode plates and the anode plates are already in a required strip structure and therefore need no cutting for winding, thereby avoiding generation of burrs and lumps, reducing safety risks in production, and improving utilization of electrode plates.

## Description

### TECHNICAL FIELD

This application relates to the field of battery technologies, and in particular, to a flexible battery and a manufacturing method thereof.

### BACKGROUND

With the rapid development of mobile devices and wearable devices, higher requirements have been imposed on the flexibility of batteries used in these devices. Currently, flexible batteries are produced by cutting integrally coated electrode plates. This allows for flexibility of the spines. However, burrs are formed during cutting of the coated electrode plates, resulting in potential safety hazards. In addition, the cutting and removal treatment for the electrode plates causes a lower utilization of the electrode plates and a higher cost.

### SUMMARY

To resolve the foregoing technical problems, some embodiments of this application provide a flexible battery and a manufacturing method thereof to reduce safety risks in production and improve the utilization of electrode plates.

The following technical solutions are adopted for some embodiments of this application to resolve the technical problems.

According to a first aspect, a flexible battery is provided, including a plurality of cathode plates, a cathode electrical connector, a plurality of anode plates, an anode electrical connector, and a plurality of separators. The cathode electrical connector is welded to the plurality of cathode plates, and the anode electrical connector is welded to the plurality of anode plates. Each of the anode plates corresponds to one of the cathode plates, and each of the separators is disposed between one corresponding anode plate and one corresponding cathode plate. The plurality of cathode plates, the plurality of anode plates, and the plurality of separators are wound on the cathode electrical connector and the anode electrical connector to form a plurality of cell units and spine portions connecting adjacent two of the cell units.

In some embodiments, the cell units are bent, and/or the spine portions are bent.

In some embodiments, the spine portions are of any one of a wavy shape, a sinusoidal shape, a U shape, or a zigzag shape.

In some embodiments, a distance is provided between adjacent two of the cell units.

In some embodiments, the cathode plate includes a first uncoated foil region, a second uncoated foil region, and a first coating region, where the first coating region is located between the first uncoated foil region and the second uncoated foil region, and the cathode electrical connector is welded to the first uncoated foil regions of the plurality of cathode plates. The anode plate includes a third uncoated foil region, a fourth uncoated foil region, and a second coating region, where the second coating region is located between the third uncoated foil region and the fourth uncoated foil region, and the anode electrical connector is welded to the third uncoated foil regions of the plurality of anode plates.

In some embodiments, the flexible battery further includes a packaging film, the cell unit being accommodated in the packaging film.

In some embodiments, the cathode electrical connector is provided with a first insulating tape on a surface, and the anode electrical connector is provided with a second insulating tape on a surface.

According to a second aspect, a manufacturing method of flexible battery is provided. The method includes: sequentially spacing apart a plurality of cathode plates; welding a cathode electrical connector to the plurality of cathode plates to form a first connected structure; sequentially spacing apart a plurality of anode plates; welding an anode electrical connector to the plurality of anode plates to form a second connected structure; sequentially stacking the first connected structure, a first separator, the second connected structure, and a second separator to form a stacked structure; winding the stacked structure; and cutting apart portions, located between adjacent two of the anode plates and between adjacent two of the cathode plates, of the first separator and the second separator, to form a plurality of cell units and spine portions connecting adjacent two of the cell units.

In some embodiments, the method further includes: bending the cell units.

In some embodiments, the method further includes: bending the spine portions.

In some embodiments, the step of bending the spine portions further includes: bending the spine portions into any one of a wavy shape, a sinusoidal shape, a U shape, or a zigzag shape.

In some embodiments, the method further includes: packaging the cell units in a packaging film.

In some embodiments, the step of welding a cathode electrical connector to the plurality of cathode plates to form a first connected structure further includes: welding the cathode electrical connector to the first uncoated foil regions of the plurality of cathode plates to form the first connected structure. The step of welding an anode electrical connector to the plurality of anode plates to form a second connected structure further includes: welding the anode electrical connector to the third uncoated foil regions of the plurality of anode plates to form the second connected structure.

In some embodiments, the plurality of cathode plates and the cathode electrical connector are laser-welded or ultrasonically welded. The plurality of anode plates and the anode electrical connector are laser-welded or ultrasonically welded.

In some embodiments, the portions, located between adjacent two of the anode plates, of the first separator and the second separator are cut apart using a laser cutting or die cutting process.

In some embodiments, the method further includes: adhering a first insulating tape to each of two surfaces of the cathode electrical connector, and adhering a second insulating tape to each of two surfaces of the anode electrical connector.

As compared with the prior art, in some embodiments of this application, the plurality of cathode plates are welded to the cathode electrical connector; the plurality of anode plates are welded to the anode electrical connector; the plurality of cathode plates, the plurality of anode plates, and the plurality of separators are wound to form the plurality of cell units; and the portions, located between adjacent two of the cell units, of the cathode electrical connector and the anode electrical connector form the spine portions. The cathode plates and the anode plates are already in a strip structure and therefore need no cutting for winding, thereby avoiding generation of burrs and lumps, reducing safety risks in production, and improving utilization of electrode plates.

### BRIEF DESCRIPTION OF DRAWINGS

One or more embodiments are used as examples for description by using corresponding accompanying drawings. These example descriptions impose no limitation on some embodiments. Elements with a same reference sign in the accompanying drawings represent similar elements. Unless otherwise stated, the figures in the accompanying drawings impose no limitation on a scale.
FIG. 1 is a schematic structural diagram of a flexible battery according to an embodiment of this application;
FIG. 2 is a schematic exploded view of the flexible battery shown in FIG. 1;
FIG. 3 is a schematic structural diagram of a first connected structure, a second connected structure, a first separator, and a second separator before winding of the flexible battery shown in FIG. 1;
FIG. 4 is a schematic structural diagram of the first connected structure, the second connected structure, the first separator, and the second separator shown in FIG. 3 after winding;
FIG. 5 is a schematic structural diagram of the flexible battery shown in FIG. 1 from another perspective;
FIG. 6 is a schematic structural diagram of a flexible battery according to another embodiment of this application; and
FIG. 7 is a schematic structural diagram of a flexible battery according to another embodiment of this application.

### DESCRIPTION OF EMBODIMENTS

For ease of understanding this application, the following further describes this application in detail with reference to the accompanying drawings and specific embodiments. It should be noted that when an element is described as being "fixed to" another element, the element may be directly on the another element, or there may be one or more elements between the elements. When an element is described as being "connected to" another element, the element may be directly connected to the another element, or there may be one or more elements between the elements. The terms "vertical", "horizontal", "left", "right", "inside", "outside", and similar expressions used in this specification are merely for description purposes.

Unless otherwise defined, all technical and scientific terms used in this specification shall have the same meanings as commonly understood by persons skilled in the art to which this application belongs. The terms used in the specification of this application are merely intended to describe specific embodiments rather than to constitute any limitation on this application. The term "and/or" used herein includes any and all combinations of one or more associated items that are listed.

In addition, technical features involved in different embodiments of this application that are described below may be combined as long as they do not conflict with each other.

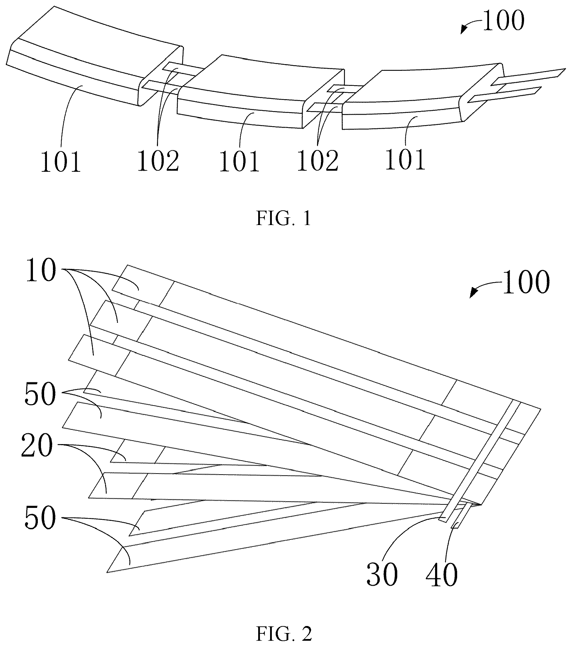

Referring to FIG. 1 and FIG. 2, an embodiment of this application provides a flexible battery 100 including cathode plates 10, anode plates 20, a cathode electrical connector 30, an anode electrical connector 40, and separators 50. There are a plurality of cathode plates 10, a plurality of anode plates 20, and a plurality of separators 50. Each of the cathode plates 10 corresponds to one of the anode plates 20, and each of the separators 50 is disposed between one corresponding cathode plate 10 and one corresponding anode plate 20. The plurality of cathode plates 10 are welded to the cathode electrical connector 30, and the plurality of anode plates 20 are welded to the anode electrical connector 40. The plurality of cathode plates 10, the plurality of anode plates 20, and the plurality of separators 50 are wound on the cathode electrical connector 30 and the anode electrical connector 40 to form a plurality of cell units 101 and spine portions 102 connecting adjacent two of the cell units 101.

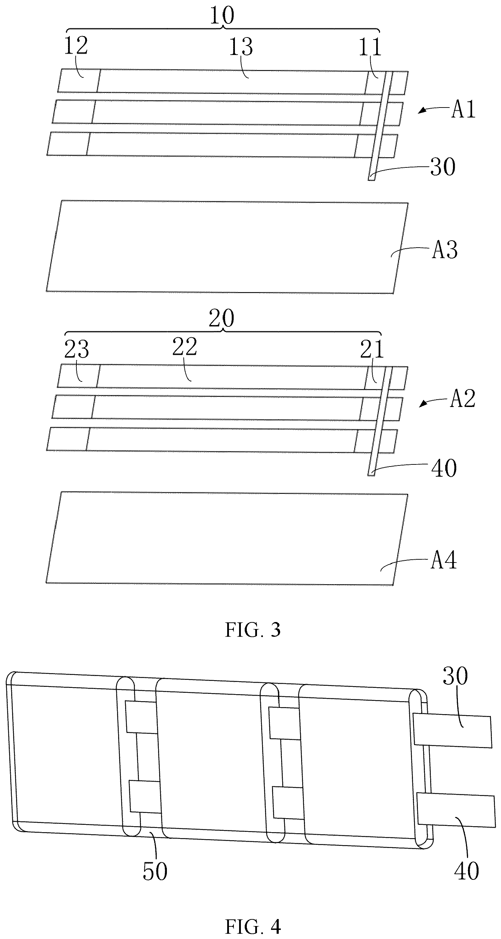

Referring to FIG. 3, the cathode plate 10 is a strip sheet structure, and the cathode plate 10 includes a current collector and a cathode material applied on the current collector, where the current collector of the cathode plate 10 may be an aluminum foil, and the cathode material may be lithium cobaltate, lithium iron phosphate, a ternary material, or the like. Any surface of the cathode plate 10 is divided into a first uncoated foil region 11, a second uncoated foil region 12, and a first coating region 13 according to preset positions. The first uncoated foil region 11 and the second uncoated foil region 12 are respectively disposed at two ends of the cathode plate 10 in a length direction of the cathode plate 10, and the first coating region 13 is disposed between the first uncoated foil region 11 and the second uncoated foil region 12. The plurality of cathode plates 10 are spaced apart sequentially. The cathode electrical connector 30 is welded to the first uncoated foil regions 11 of the plurality of cathode plates 10 to form a first connected structure A1. The cathode electrical connector 30 and the plurality of cathode plates 10 may be connected by laser welding, ultrasonic welding, or the like.

The anode plate 20 is similar to the cathode plate 10 in structure. The anode plate 20 is a strip sheet structure, and the anode plate 20 includes a current collector and an anode material applied on the current collector, where the current collector of the anode plate 20 may be a copper foil, and the anode material may be graphite, silicon, or the like. Any surface of the anode plate 20 is divided into a third uncoated foil region 21, a fourth uncoated foil region 22, and a second coating region 23 according to preset positions. The third uncoated foil region 21 and the fourth uncoated foil region 22 are respectively disposed at two ends of the anode plate 20 in a length direction of the anode plate 20, and the second coating region 23 is disposed between the third uncoated foil region 21 and the fourth uncoated foil region 22. The plurality of anode plates 20 are spaced apart sequentially. The anode electrical connector 40 is welded to the third uncoated foil regions 21 of the plurality of anode plates 20 to form a second connected structure A2. The anode electrical connector 40 and the plurality of anode plates 20 may be connected by laser welding, ultrasonic welding, or the like.

The cathode electrical connector 30 is made of a metal material. The cathode electrical connector 30 is a strip structure or a wire structure. For example, the cathode electrical connector 30 may be an aluminum metal strip, a copper wire, or the like. The cathode electrical connector 30 extends along an arrangement direction of the plurality of cathode plates 10. An end of the cathode electrical connector 30 extends out of the plurality of cathode plates 10. The end of the cathode electrical connector 30 extending out of the plurality of cathode plates 10 serves as a positive tab of the flexible battery 100, and a joint between the positive tab and the cathode plate 10 is provided with a tab adhesive (not shown in the figure).

The anode electrical connector 40 is made of a metal material. The anode electrical connector 40 may be a strip structure or a wire structure. For example, the anode electrical connector 40 may be a nickel metal strip, an aluminum wire, or the like. The anode electrical connector 40 extends along an arrangement direction of the plurality of anode plates 20. An end of the anode electrical connector 40 extends out of the plurality of anode plates 20. The end of the anode electrical connector 40 extending out of the plurality of anode plates 20 serves as a negative tab of the flexible battery 100, and a joint between the negative tab and the anode plate 20 is provided with a tab adhesive (not shown in the figure).

In some embodiments, after the cathode electrical connector 30 and the plurality of cathode plates 10 are welded, a first insulating tape is adhered to each of two surfaces of the cathode electrical connector 30 (not shown in the figure) to form the first connected structure A1; and after the anode electrical connector 40 and the plurality of anode plates 20 are welded, a second insulating tape is adhered to each of two surfaces of the anode electrical connector 40 (not shown in the figure) to form the second connected structure A2, thereby preventing the cathode electrical connector 30 and the anode electrical connector 40 from puncturing the cathode plates 10, the anode plates 20, and the separators 50 during winding, and also providing insulation for the spine portions 102.

The separator 50 is a strip sheet structure made of an insulating material, and the separator 50 is formed by cutting a complete piece of separator. The complete piece of separator is wound on the cathode electrical connector 30 and the anode electrical connector 40 and is then cut apart or partially cut apart to form a plurality of separators 50. In these embodiments, two complete pieces of separators are provided, which are a first separator A3 and a second separator A4, respectively.

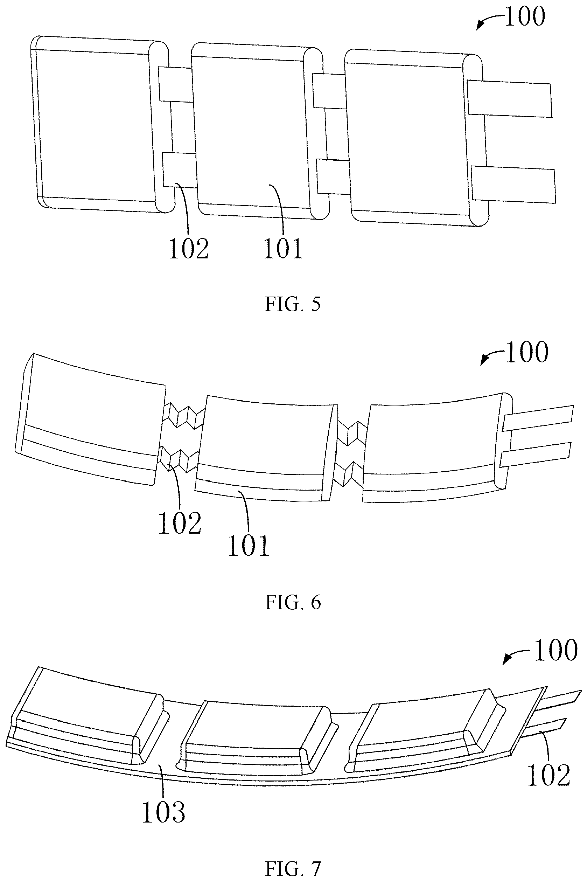

Referring to FIG. 4 and FIG. 5, during manufacturing of the flexible battery 100, the first connected structure A1, a complete piece of the first separator A3, the second connected structure A2, and a complete piece of the second separator A4 are first wound using a winding machine to form an integrated structure, and then needless parts of the first separator A3 and second separator A4 are cut apart using a laser cutting process or a mechanism such as a cutting die.

Specifically, the first connected structure A1, the first separator A3, the second connected structure A2, and the second separator A4 are sequentially stacked in a guide groove of the winding machine, each of the cathode plates 10 corresponds to one of the anode plates 20 in position, and the cathode electrical connector 30 corresponds to the anode electrical connector 40 in position, thereby guaranteeing parallelism of the cathode plate 10 and the anode plate 20 before winding and during winding; the first uncoated foil region 11 and the third uncoated foil region 21 serve as the head of winding, and the first connected structure A1, a complete piece of the first separator A3, the second connected structure A2, and a complete piece of the second separator A4 are wound using the winding machine to form an integrated structure (shown in FIG. 4); and portions, located between adjacent two of the cathode plates 10 and between adjacent two of the anode plates 20, of the first separator A3 and the second separator A4 are cut apart, and the first separator A3 and the second separator A4 each form a plurality of separators 50, such that the cathode electrical connector 30 and the anode electrical connector 40 are partially exposed (shown in FIG. 5). A cathode plate 10, an anode plate 20, a separator 50 formed by cutting the first separator A3, and a separator 50 formed by cutting the second separator A4 are wound to form a cell unit 101. Portions, located between adjacent two of the cell units 101, of the cathode electrical connector 30 and the anode electrical connector 40 form spine portions 102.

A distance is provided between adjacent two of the cell units 101, so as to ensure that the separators 50 formed by cutting apart the first separator A3 and the second separator A4 do not shrink into the cell units 101. The distance is set based on thickness of the battery and a required bending angle of the battery. The bending angle of the battery is typically not greater than 90 degrees, and the distance is typically not less than the thickness of the battery. The thickness of the battery is thickness of the cell unit 101, and the bending angle of the battery is an included angle between adjacent two of the cell units 101.

Referring to FIG. 6 and FIG. 7, in some embodiments, the cell units 101 are set to be bent, thereby improving flexibility of joints of the battery, and reducing a tensile stress from the cathode electrical connector 30 and the anode electrical connector 40 to the cell units 101. The cell units 101 can be bent using a mold pressing process, so that two ends of a cell unit 101 connected to the spine portions 102 are both bent relative to a central portion of the cell unit 101 to form an arc shape, thereby obtaining a required bending radian.

In some embodiments, the spine portions 102 are set to be bent, and the spine portions 102 may be of a wavy shape, a sinusoidal shape, a U shape, a zigzag shape, or another specially-structured shape. The spine portions 102 are bent using a mold-pressing process, and then the plurality of cell units 101 are integrally bent, thereby reducing a stress of the cell units 101 in a stretching state during integral mold pressing.

In some embodiments, the flexible battery 100 further includes a packaging film 103, the cell units 101 are accommodated in the packaging film 103. The packaging film 103 may wrap only the cell units 101. Alternatively, the packaging film 103 may integrally wrap the cell units 101 and the spine portions 102. Still alternatively, the packaging film 103 separately wraps the cell units 101 and the spine portions 102. This is not limited herein.

The packaging film 103 may be formed by performing integral packaging with a packaging material, for example, the packaging material is heat-sealed outside the cell unit 101 to form the packaging film 103. Alternatively, the packaging film 103 may be formed by performing pit punching on a packaging material, for example, the packaging material is subjected to pit punching according to an overall shape of the cell units 101 and the spine portions 102, and then the cell units 101 and the spine portions 102 are integrally encapsulated in a housing. The packaging material may be an aluminum-plastic film.

The following describes a manufacturing method of flexible battery 100 with reference to the foregoing accompanying drawings:
a plurality of cathode plates 10 are spaced apart sequentially, and a cathode electrical connector 30 is welded to the plurality of cathode plates 10 to form a first connected structure A1;
a plurality of anode plates 20 are spaced apart sequentially, and an anode electrical connector 40 is welded to the plurality of anode plates 20 to form a second connected structure A2;
the first connected structure A1, a first separator A3, the second connected structure A2, and a second separator A4 are sequentially stacked to form a stacked structure;
the stacked structure is wound using the cathode electrical connector 30 and the anode electrical connector 40 as shafts;
cutting apart portions, located between adjacent two of the anode plates and between adjacent two of the cathode plates, of the first separator A3and the second separator A4, to form a plurality of cell units 101 and spine portions 102 connecting adjacent two of the cell units;
the spine portions 102 are bent;
the cell units 101 are bent; and
the cell units 101 are packaged in a packaging film 103.

Specifically, the cathode electrical connector 30 and the first uncoated foil regions 11 of the plurality of cathode plates 10 are laser-welded or ultrasonically welded, and then a first insulating tape is adhered to each of two surfaces of the cathode electrical connector 30 to form the first connected structure A1; the anode electrical connector 40 and the third uncoated foil regions 21 of the plurality of anode plates 20 are laser-welded or ultrasonically welded, and then a second insulating tape is adhered to each of two surfaces of the anode electrical connector 40 to form the second connected structure A2; the first connected structure A1, the first separator A3, the second connected structure A2, and the second separator A4 are sequentially stacked and then wound using a winding machine to form an integrated structure; the first separator A3, the plurality of first separators A4, located between adjacent two of the anode plates and between adjacent two of the cathode plates are cut apart using a laser cutting process or a mechanism such as a cutting die; the cell units 101 are mold-pressed into a wavy shape, a sinusoidal shape, a U shape, a zigzag shape, or any other shape; the cell units 101 are bent into an arc shape using a mold pressing process so as to obtain a required bending radian; and a packaging material is formed by heat sealing or pit punching using a die and externally packages the cell units 101.

In some embodiments, the cathode plates 10 and the anode plates 20 are already in a required strip structure before coating and therefore need no cutting for winding, thereby avoiding generation of burrs and lumps, reducing safety risks in production, and improving utilization of electrode plates. In addition, the first separator A3 and the second separator A4 are complete pieces of separators disposed between the plurality of cathode plates 10 and the plurality of anode plates 20, so that the plurality of cathode plates 10 and the plurality of anode plates 20 are integrally wound and molded, improving the production efficiency. Moreover, an end of the cathode electrical connector 30 protruding from the cathode plate 10 can serve as a positive tab, and an end of the anode electrical connector 40 protruding from the anode plate 20 can serve as a negative tab. Therefore, there is no need to weld tabs additionally, achieving a simpler manufacturing process.

In conclusion, it should be noted that the foregoing embodiments are merely intended to describe the technical solutions of this application, and are not intended to limit this application. Under the idea of this application, the foregoing embodiments or the technical features in different embodiments can also be combined, the steps can be implemented in any order, and there are many other changes in different aspects of this application as described above, which, for the sake of brevity, are not provided in detail. Although this application is described in detail with reference to the foregoing embodiments, persons of ordinary skill in the art should understand that modifications can be made to the technical solutions described in the foregoing embodiments, or equivalent substitutions can be made to some technical features therein, and these modifications or substitutions do not make the essence of the corresponding technical solutions depart from the scope of the technical solutions of some embodiments of this application.

## Claims

1. A flexible battery, comprising:
a plurality of cathode plates;
a cathode electrical connector welded to the plurality of cathode plates;
a plurality of anode plates, each of the anode plates corresponding to one of the cathode plates;
an anode electrical connector welded to the plurality of anode plates; and
a plurality of separators, each of the separators being disposed between one corresponding anode plate and one corresponding cathode plate; wherein
the plurality of cathode plates, the plurality of anode plates, and the plurality of separators are wound on the cathode electrical connector and the anode electrical connector to form a plurality of cell units and spine portions connecting adjacent two of the cell units.

2. The flexible battery according to claim 1, wherein the cell units are bent, and/or the spine portions are bent.

3. The flexible battery according to claim 2, wherein the spine portions are of any one of a wavy shape, a sinusoidal shape, a U shape, or a zigzag shape.

4. The flexible battery according to claim 1, wherein a distance is provided between adjacent two of the cell units.

5. The flexible battery according to claim 1, wherein the cathode plate comprises a first uncoated foil region, a second uncoated foil region, and a first coating region, the first coating region being located between the first uncoated foil region and the second uncoated foil region;
the cathode electrical connector is welded to the first uncoated foil regions of the plurality of cathode plates;
the anode plate comprises a third uncoated foil region, a fourth uncoated foil region, and a second coating region, the second coating region being located between the third uncoated foil region and the fourth uncoated foil region; and
the anode electrical connector is welded to the third uncoated foil regions of the plurality of anode plates.

6. The flexible battery according to any one of claims 1 to 5, wherein the flexible battery further comprises a packaging film, the cell unit being accommodated in the packaging film.

7. The flexible battery according to any one of claims 1 to 5, wherein the cathode electrical connector is provided with a first insulating tape on a surface, and the anode electrical connector is provided with a second insulating tape on a surface.

8. A manufacturing method of flexible battery, wherein the method comprising:
sequentially spacing apart a plurality of cathode plates;
welding a cathode electrical connector to the plurality of cathode plates to form a first connected structure;
sequentially spacing apart a plurality of anode plates;
welding an anode electrical connector to the plurality of anode plates to form a second connected structure;
sequentially stacking the first connected structure, a first separator, the second connected structure, and a second separator to form a stacked structure;
winding the stacked structure around a shaft acted by the cathode electrical connector and the anode electrical connector; and
cutting apart portions, located between adjacent two of the anode plates and between adjacent two of the cathode plates, of the first separator and the second separator, to form a plurality of cell units and spine portions connecting adjacent two of the cell units.

9. The manufacturing method of flexible battery according to claim 8, wherein the method further comprises:
bending the cell units.

10. The manufacturing method of flexible battery according to claim 8 or 9, wherein the method comprises:
bending the spine portions.

11. The manufacturing method of flexible battery according to claim 10, wherein the step of bending the spine portions further comprises:
bending the spine portions into any one of a wavy shape, a sinusoidal shape, a U shape, or a zigzag shape.

12. The manufacturing method of flexible battery according to claim 8, wherein the method further comprises:
packaging the cell units in a packaging film.

13. The manufacturing method of flexible battery according to claim 8, wherein the cathode plate comprises a first uncoated foil region, a second uncoated foil region, and a first coating region, the first coating region being located between the first uncoated foil region and the second uncoated foil region;
the step of welding a cathode electrical connector to the plurality of cathode plates to form a first connected structure further comprises: welding the cathode electrical connector to the first uncoated foil regions of the plurality of cathode plates to form the first connected structure;
the anode plate comprises a third uncoated foil region, a fourth uncoated foil region, and a second coating region, the second coating region being located between the third uncoated foil region and the fourth uncoated foil region; and
the step of welding an anode electrical connector to the plurality of anode plates to form a second connected structure further comprises: welding the anode electrical connector to the third uncoated foil regions of the plurality of anode plates to form the second connected structure.

14. The manufacturing method of flexible battery according to claim 8 or claim 13, wherein the plurality of cathode plates and the cathode electrical connector are laser-welded or ultrasonically welded; and
the plurality of anode plates and the anode electrical connector are laser-welded or ultrasonically welded.

15. The manufacturing method of flexible battery according to claim 8, wherein the step of cutting apart portions, located between adjacent two of the anode plates, of the first separator and the second separator further comprises:
cutting apart the portions, located between adjacent two of the anode plates, of the first separator and the second separator by using a laser cutting or die cutting process.

16. The manufacturing method of flexible battery according to claim 8, wherein the method further comprises:
adhering a first insulating tape to each of two surfaces of the cathode electrical connector; and
adhering a second insulating tape to each of two surfaces of the anode electrical connector.
